Europäisches Patentamt

European Patent Office

Office européen des brevets

(19)

(11) Publication number: **0 085 664**
**B1**

(12) **EUROPEAN PATENT SPECIFICATION**

(45) Date of publication of patent specification: **30.07.86**

(51) Int. Cl.⁴: **F 16 L 33/08**

(21) Application number: **83850019.7**

(22) Date of filing: **28.01.83**

(54) **Hose clamp.**

(30) Priority: **29.01.82 SE 8200510**

(43) Date of publication of application:
**10.08.83 Bulletin 83/32**

(45) Publication of the grant of the patent:
**30.07.86 Bulletin 86/31**

(84) Designated Contracting States:
**AT BE CH DE FR GB IT LI LU NL SE**

(56) References cited:
**EP-A-0 012 680**
**DE-A-2 800 824**
**DE-B-2 053 159**
**DE-B-2 625 324**
**US-A-2 571 659**
**US-A-3 195 204**
**US-A-4 307 495**

(73) Proprietor: **Allmänna Brandredskapsaffären AB**
**Scheelegatan 28**
**S-112 28 Stockholm (SE)**

(72) Inventor: **Ribrant, Sven**
**Röhällvägen**
**S-386 00 Färjestaden (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

Courier Press, Leamington Spa, England.

## Description

The subject invention relates to an improved hose clamp of the kind comprising a steel strip bent to annular shape with the ends of the strip overlapping, the radially outer end portion of the strip being formed on its external face with a lengthwise extending threaded passageway having transverse grooves in which engage the threads of a headed worm, the latter being rotatably journalled in a sleeve but axially non-slidable therein, said sleeve enclosing the screw worm and comprising a space allowing the outer strip end portion to be displaced between the inner strip end portion and the worm by rotating the latter.

A hose clamp of this kind is disclosed in DE—A—2 053 159. This prior-art hose clamp also has a projection engaging in a matching notch in the inner strip end portion and engaging against the inner face of the outer strip end portion. Owing to this arrangement lengthwise movements of the inner strip and transverse movement of the side walls of the worm sleeve are prevented.             —

A similar arrangement is disclosed in US—A—2 571 659, according to which retaining projections in the form of lugs engage in a notch and engage against the outer strip end portion.

In the manufacture of hose clamps of the kind outlined above the worm sleeve is generally produced from a tubular blank which is upset so that a space is formed to accommodate the worm and the two strip end portions. It is also known to manufacture the worm sleeve from a strip blank which is bent to the desired configuration, whereupon the lengthwise edge portions are welded together. The latter working step is difficult to effect in an automised manner at high speeds of assembly if a high-quality standard is to be maintained. The bending operation to which the strip blank is subjected, is rather complicated, in consequence of which it becomes necessary to allow tolerance variations in the edge portions of the future weld joint within certain limits. This, in turn, means that the finished weld joint often has a bead, which hampers the subsequent assembly operations. If instead, in order to obviate the risks of bead formation, the supply of welding material were to be reduced, some worm sleeves would as a consequence exhibit weak welding joints.

In using hose clamps of the kind above, being, as stated, provided with a worm sleeve enclosing the worm and the two strip end portions, damages to the hose material are sometimes found as also leakage beyond the hose clamp. Both problems are usually caused by the "thresholds" formed by the bottom of the worm sleeve both at the sleeve end where the inner strip end portion enters the worm sleeve and at the opposite end, where the outer strip end portion enters the worm sleeve.

To solve this problem attempts have been made to machine the threshold portions of the worm sleeve bottom to ensure that the thickness of the sleeve bottom tapers from the sleeve centre towards the ends thereof, the threshold portions thus disappearing. This is suggested in e.g. GB 559 653. However, this machine treatment weakens the worm sleeve and also increases the manufacturing costs to a not insignificant degree.

It is also known to allow the inner strip end portion to extend through the worm sleeve so as to form a tongue in contact with the outer strip end portion and, at the opposite end of the worm sleeve, to form a Z-shaped section designed to urge the strip to a position close to the level of the worm sleeve bottom. Also these kind of arrangements do, however, raise the manufacturing costs and they also increase the amount of material used.

The hose clamp in accordance with the subject invention is designed to allow the manufacture of worm sleeves using a conventional strip blank as the starting material and without involving complex manufacturing operations, such as welding or riveting.

It is characteristic of the invention that the worm sleeve is formed with lug portions gripping the outer strip end portion at the radially inner face of the latter, that the inner strip end portion is formed with notches matching the lug portions, the latter being arranged for insertion into said notches into abutment against the inner face of the outer strip end portion the lug portions and the notches having such an undercut configuration that after interconnection the lug portions and the notches will interlock to provide a retaining effect on each other, and continuously smooth radially inner and outer surfaces, the worm sleeve thus being arranged, after said interconnection, to prevent lengthwise movements of the inner strip end portion relative to the sleeve, and the inner strip end portion thus being arranged to prevent a transverse movement of the side walls of the worm sleeve.

The arrangement in accordance with the invention provides safe and secure attachment of the inner strip end portion inside the worm sleeve without the use of locking means in the form of a notch in the inner strip end portion and a correspondingly shaped shoulder formed at the bottom of the worm sleeve to engage with said notches, which is the conventional arrangement in prior-art hose clamps. In addition, the arrangement in accordance with the subject invention also eliminates the threshold portions at the bottom of the worm sleeve.

The invention will be described in closer detail in the following with reference to the accompanying drawings illustrating one embodiment of the invention by way of example. In the drawings

Fig. 1 shows a hose clamp in accordance with the invention,

Fig. 2 is a sectional view along line II—II in Fig. 1,

Fig. 3 shows the two details of Fig. 2 detached from one another, and

Fig. 4 is a sectional view along line IV—IV of Fig. 1.

The hose clamp shown in the drawings comprises a sleeve 1, a steel strip 2 and a worm 4 with a head 3 thereon. The strip 2 is bent to an annular shape. Its radially inner end portion 5 is attached to the sleeve 1 and its radially outer end portion 6 is provided with a longitudinal threaded passageway 7 in which engage the threads 8 formed on the worm 4. The inner strip end portion 5 extends as a conically tapering tongue 9 past the worm sleeve 1 in contact with the outer end portion 6.

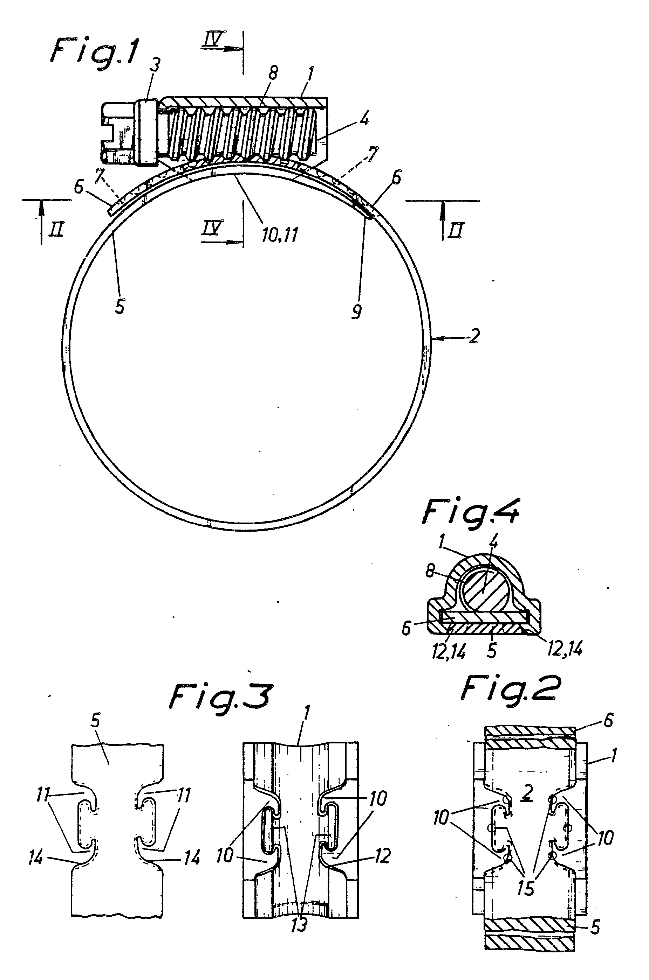

As illustrated in Figs. 2 and 3 the bottom face of the worm sleeve 1 is provided with lug portions 10 gripping the outer strip end portion 6. The inner strip end portion 5 is provided with notches 11 having a shape matching that of the lugs 10. The edge walls 12 of the lug portions from an opening 13, which widens conically in a direction radially inwards in the hose clamp and in a corresponding manner the edge walls 14 of the notches 11 extend obliquely in the radial direction.

Consequently, the inner strip end portion 5 may be inserted into the worm sleeve 1 until it is level with the sleeve bottom with the lug portions 10 engaging the notches 11. In this manner, the lug portions 10 prevent the inner strip end portion 5 from moving longitudinally relative to the worm sleeve 1. The strip end portions 5 may also be permanently attached to the worm sleeve 1 through stamping as at 15.

Owing to this interconnection of the worm sleeve and the inner strip end portion 5 there is obtained a hose clamp having an "even" inner face, e.g. without the thresholds found in prior-art hose clamps, which thresholds have hitherto necessitated a special configuration of the inner strip end portion or of the worm sleeve. The operation to bend the worm sleeve and to interconnect it with the inner strip end portion can be effected at high speeds in an automatic assembly machine. The manufacturing machinery may be simplified, since fewer working steps are required, owing to the simplified design.

The inner face of the hose clamp has in ideal configuration ensuring that upon tightening of the clamp the compression force will be equally and uniformly distributed around the periphery of the clamp. As a result, the risk of leakage and damage to the hose material is eliminated.

The configuration of the lug portions and the notches formed in the strip end portion 5 as shown and described herein serves to prevent the side walls of the worm sleeve from sliding apart, also when exposed to the stress occurring when the worm is tightened. Because the lug portions 10 grip about the outer strip end portion 6 they prevent this strip end portion from pressing the inner strip end portion 5 inwards in the hose clamp.

The invention is not limited to the embodiment described above but a number of modifications are possible within the scope of the appended claims. For instance, the tongue 9 may be omitted, in which case the worm sleeve 1 and the inner strip end portion 5 may be suitably bevelled to provide a smooth transition area towards the outer strip end portion 6. Likewise, it is possible to turn the conicity of the opening 13 radially outwards, in which case the inner strip end portion 5 must be inserted into the worm sleeve in the space intended for the outer strip end portion 6 and then be moved down to its locking position. In this case stampings as at 15 probably are not needed. In addition, the lug portions 10 and the matching notches 11 obviously could be shaped differently from those shown.

The interconnection of the joint parts between the worm sleeve 1 and the inner strip end portion 5 could also be effected by moving the hose clamp, at the end of the manufacturing path, past a laser, which is arranged to heat some or several joint areas and thus effect a total fusion of the worm sleeve to the inner strip end portion.

## Claims

1. An improved hose clamp of the kind comprising a steel strip (2) bent to annular shape with the end portions (5, 6) of the strip overlapping, the radially outer end portion (6) of the strip being formed on its external face with a lengthwise extending threaded passageway (7) having transverse grooves in which engage the threads (8) of a headed worm (4), said worm being rotatably journalled in a sleeve (1) but axially non-slidable therein, said sleeve enclosing the screw worm and comprising a space allowing the outer strip end portion (6) to be displaced between the inner strip end portion (5) and the worm (4) by rotating the latter, characterised in that, the worm sleeve (1) is formed with lug portions (10) gripping the outer strip end portion (6) at the radially inner face of the latter, in that the inner strip end portion (5) is formed with notches (11) matching the lug portions (10), the latter being arranged for insertion into said notches (11) into abutment against the inner face of said outer strip end portion (6), the lug portions (10) and the notches· (11) having such an undercut configuration that after interconnection the lug portions (10) and the notches (11) will interlock to provide a retaining effect on each other and continuously smooth radially inner and outer surfaces, the worm sleeve (1) thus being arranged, after said interconnection, to prevent lengthwise movements of the inner strip end portion relative to the sleeve, and the inner strip end portion (5) thus being arranged to prevent a transverse movement of the side walls of the worm sleeve.

2. A hose clamp as claimed in claim 1, characterised in that the edge walls (12) of the lug portions (10) form an opening (13), said opening widening conically in a direction radially inwards of the hose clamp, in that in a corresponding manner the edge walls (14) of the notches (11) extend obliquely to the radial direction, and in that the contiguous areas of the lug portions (10) and the notches (11) are provided with stampings (15), said obliquely extending edge walls (12—14) serving to prevent displacement of the inner strip end portion (5) relative the worm sleeve (1) in a direction radially outwards, and said stampings (15) serving to lock the inner strip end portion (5) relative to the worm sleeve (1) against movements radially inwards.

## Patentansprüche

1. Verbesserter Klemmring für einen Schlauch, von der Art, die ein Stahlband (2) umfasst, das zu einer Ringform mit überlappenden Endteilen (5, 6) des Bandes gekrümmt ist, wobei der radial gesehen äussere Endteil (6) des Bandes auf seiner Aussenseite mit einer angeformten gewindetragenden Durchführung (7) versehen ist, die sich in Längsrichtung erstreckt und querliegende Rillen aufweist, in welche das Gewinde (8) einer mit einem Kopf versehenen Schnecke (4) eingreift, wobei diese Schnecke in einer Buchse (1) drehbar, jedoch nicht axial gleitfähig gelagert ist, und wobei diese Buchse die Gewindeschnecke umschliesst und einen Raum umfasst, der dem äusseren Endteil (6) des Bandes ermöglicht, zwischen dem inneren Endteil (5) des Bandes und der Schnecke (4) durch Drehung derselben bewegt zu werden, dadurch gekennzeichnet, dass die Schneckenbuchse (1) mit angeformten Vorsprungteilen (10) versehen ist, welche den äusseren Endteil (6) des Bandes an dessen radialer Innenseite greifen, dass der innere Endteil (5) des Bandes mit angeformten, den Vorsprungteilen (10) entsprechenden Ausnehmungen (11) versehen ist, wobei die Vorsprungteile zur Einführung in diese Ausnehmungen (11) unter Berührung der Innenseite des äusseren Endteils (6) des Bandes bestimmt sind, wobei die Vorsprungteile (10) und die Ausnehmungen (11) eine derart ausgeschnittene Form aufweisen, dass die Vorsprungteile (10) und die Ausnehmungen (11) nach deren Zusammenfügung verhakt sind, um eine gegenseitige Rückhaltewirkung und kontinuierlich glatte radiale Innenbzw. Aussenflächen zu ergeben, wodurch die Schneckenbuchse (1) so ausgebildet ist, dass sie nach Vornahme der genannten Zusammenfügung längsgerichtete Bewegungen des inneren Endteils (5) des Bandes in bezug auf die Buchse verhindert, und wodurch der innere Endteil (5) des Bandes so ausgebildet ist, dass er eine quergerichtete Bewegung der Seitenwände der Schneckenbuchse verhindert.

2. Schlauchklemmring nach Anspruch · 1, dadurch gekennzeichnet, dass die Randwände (12) der Vorsprungteile (10) eine Öffnung (13) bilden, wobei sich diese Öffnung radial zum Inneren des Schlauchklemmringes hin konisch erweitert, dass sich die Randwände (14) der Ausnehmungen (11) in entsprechenden Weise schräg zur radialen Richtung erstrecken, und dass die aneinander angrenzenden Bereiche der Vorsprungteile (10) und der Ausnehmungen (11) mit Stanzstellen (15) versehen sind, wobei die sich schräg erstreckenden Randwände (12—14) dazu dienen, eine radial nach aussen gerichtete Bewegung des inneren Endteils (5) des Bandes in bezug auf die Schneckenbuchse (1) zu verhindern, und die Stanzstellen (15) dazu dienen, den inneren Endteil (5) des Bandes in bezug auf die Schneckenbuchse (1) gegen radial nach innen gerichtete Bewegung zu verriegeln.

## Revendications

1. Collier de serrage amélioré pour tuyau, du genre comportant une bande d'acier (2) courbée jusqu'à prendre une forme annulaire telle que les parties terminales (5, 6) de la bande se recouvrent, la partie terminale extérieure (6) de la bande, telle que vue en direction radiale, étant conformée en sa face extérieure avec un passage fileté (7) qui s'étend longitudinalement et présente des rainures transversales dans lesquelles s'engagent les filets (8) d'une vis sans fin (4) munie d'une tête, cette vis sans fin reposant dans une douille (1) servant de palier et dans laquelle elle peut tourner mais non se déplacer axialement, cette douille entourant la vis sans fin et comportant un espace qui permet à la partie terminale extérieure (6) de la bande de se déplacer entre la partie terminale intérieure (5) de la bande et la vis sans fin (4) sous l'effet de la rotation de cette dernière, caractérisé en ce que la douille (1) de la vis sans fin est conformée avec des parties formant ergot (10) qui saisissent la partie terminale extérieure (6) de la bande en la face intérieure de cette dernière, telle que vue en direction radiale, en ce que la partie terminale intérieure (5) de la bande est conformé avec des encoches (11) appariées aux parties formant ergot (10), ces dernières étant disposées de façon à pouvoir s'insérer dans ces encoches (11) en butant contre la face intérieure de la partie terminale extérieure (6) de la bande, les parties formant ergot (10) et les encoches (11) présentant une telle configuration de découpe qu'après leur interconnexion les parties formant ergot (10) et les encoches (11) sont verrouillées ensemble de façon à exercer un effet de rétention l'une sur l'autre tout en présentant des surfaces respectivement intérieure et extérieure continues et lisses, telles que vues en direction radiale, la douille de la vis sans fin (1) étant par conséquent disposée, après que ladite interconnexion aid été effectuée, de façon à empêcher les mouvements longitudinaux de la partie terminale intérieure de la bande relativement à la douille, et la partie terminale intérieure (5) de la bande étant par conséquent disposée de façon àt empêcher un mouvement transversal des parois latérales de la douille de la vis sans fin.

2. Collier de serrage selon la revendication 1, caractérisé en ce que les parois de bordure (12) des parties formant ergot (10) forment une ouverture (13), cette ouverture s'élargissant coniquement dans une direction orientée vers l'intérieur du collier pour tuyau, tel que vu en direction radiale, en ce que de manière correspondante les parois de bordure (14) des encoches (11) s'étendent obliquement par rapport à la direction radiale, et que les domaines contigus des parties formant ergot (10) et des encoches (11) sont pourvus d'emplacements emboutis (15), ces parois de bordure (12—14) qui s'étendent obliquement servant à empêcher le déplacement de la partie terminale intérieure (5) de la bande relativement à la douille de la vis sans fin (1) dans une direction radiale orientée vers l'extérieur, et ces emplacements emboutis (15) servant à verrouiller la partie terminale intérieure (5) de la bande relativement à la douille de la vis sans fin (1) contre des mouvements dans une direction radiale orientée vers l'intérieur.

Fig.1

Fig.4

Fig.3

Fig.2